# FASCICULE DE BREVET EUROPEEN

(11) **EP 1 310 847 B1**
(45) Date de publication et mention de la délivrance du brevet: **19.01.2005**
(21) Numéro de dépôt: 02079594.4
(22) Date de dépôt: 28.10.2002
(51) Int. Cl.: G05B 23/02, G05B 19/042

(54) **Système de téléchargement et de télémaintenance d'une carte électronique**
System zur Fernladung und Fernüberwachung einer elektronischen Karte
System for remotely loading and remotely maintaining an electronic card

(30) Priorité: 08.11.2001 FR 0114576
(43) Date de publication de la demande: 14.05.2003
(73) Titulaire: Schneider Automation, 06560 Valbonne (FR)
(72) Inventeur: Ollive, Michel, 06100 Nice (FR); Carpine, Alain, 06560 Valbonne (FR); Chapier, Pascal, 06560 Valbonne (FR); Molinard, Jean-Luc, 06140 Vence (FR)

(56) Documents cités:
- EP-A- 0 511 752
- US-A- 5 869 980
- US-A- 5 978 578
- US-A- 6 134 707
- US-B1- 6 259 271
- US-B1- 6 286 114

## Description

La présente invention se rapporte un système de téléchargement et de télémaintenance d'une carte électronique appartenant à un équipement d'automatisme et comprenant au moins un composant interface répondant à la norme JTAG. Un tel système peut s'appliquer à toute application d'automatisme en particulier dans le domaine des automatismes industriels, des automatismes du bâtiment ou du contrôle/commande des réseaux électriques de distribution. L'invention se rapporte également à un équipement d'automatisme comprenant une carte électronique supportant un tel système de téléchargement et de télémaintenance.

Un équipement d'automatisme désigne ci-après par exemple un automate programmable, une commande numérique, une station de contrôle/commande, un module métier ou un module d'entrées/sorties d'un automate programmable, un terminal de dialogue, un variateur de vitesse, mais aussi tout équipement ou module capable d'exécuter un programme pour offrir une ou plusieurs fonctions d'automatisme dans une application d'automatisme. Les équipements d'automatisme comportent des cartes électroniques qui incorporent désormais souvent des circuits intégrés complexes, tels que des ASIC. Cette intégration suppose la capacité de pouvoir faire un diagnostic de plus en plus poussé de ces cartes électroniques. En effet, les équipements d'automatisme contrôlent et commandent des applications d'automatisme pour lesquelles toute durée d'indisponibilité est parfois très pénalisante. C'est pourquoi, on exige de plus en plus de connaître à tout moment l'état de fonctionnement des équipements d'automatisme, en particulier pour des raisons de sécurité ou de productivité.

Comme un équipement d'automatisme est habituellement installé sur un site distant, une fonction de télédiagnostic peut s'avérer nécessaire pour déterminer une panne, anticiper un dysfonctionnement quelconque dans une carte électronique ou faire d'éventuelles corrections à distance. Cependant, durant ce diagnostic, il est parfois primordial de ne pas perturber l'unité de traitement d'une carte électronique dans l'exécution d'un programme destiné au contrôle/commande de l'application d'automatisme, ce qui pourrait en particulier modifier des temps de réponse ou des temps de cycle au niveau de l'application d'automatisme. C'est pourquoi le télédiagnostic doit pouvoir s'effectuer sans intrusion sur le déroulement du ou des programmes exécutés par l'unité de traitement. De même, un diagnostic doit être réalisable même dans les cas où l'unité de traitement de la carte électronique n'est plus en état de fonctionner, par exemple en cas de panne matérielle de l'unité de traitement ou en cas de défaillance du système d'exploitation (operating system) de l'unité de traitement.

Par ailleurs, durant la fabrication d'une carte électronique, il est particulièrement intéressant de pouvoir télécharger rapidement en usine des logiciels, tels que des firmwares, dans certaines mémoires de la carte électronique, par exemple des mémoires de type FLASH, alors que l'unité de traitement de la carte électronique n'est pas encore opérationnelle. Cette possibilité simplifie le processus de fabrication car ainsi la mise en place de ces logiciels dans les mémoires ne se fait qu'au moment de la fabrication de la carte électronique sans avoir besoin de stocker de façon intermédiaire des mémoires déjà programmées. En outre, Le logiciel contenu dans les mémoires FLASH étant susceptible d'évoluer (améliorations de fonctionnalités, corrections d'anomalies), il serait nécessaire, lors d'une telle évolution, de mette à jour les mémoires stockées qui seraient déjà programmées. D'où l'intérêt de les stocker et de les monter vierges sur les cartes électroniques puis de charger le logiciel au dernier moment avec la version à jour.

Enfin, durant l'exploitation d'un équipement d'automatisme sur un site distant, un système de télémaintenance peut avantageusement proposer une fonction de téléchargement notamment pour des corrections, des mises à jour ou des nouvelles versions de programmes.

L'IEEE (Institute of Electrical and Electronics Engineers) a adopté la norme IEEE1149.1 (IEEE Standard Test Access Port and Boundary Scan Architecture), également appelée norme JTAG (Join Test Action Group), pour définir un standard de test *in situ* de circuits intégrés ou de composants complexes d'une carte électronique sans accès physique aux équipotentielles. Un tel test peut être mis en oeuvre sur des cartes en pannes fonctionnelles car il utilise des ressources très limitées et différentes (spécifiques au JTAG) de celle utilisées pour le fonctionnement de la carte. Pour cela, chaque composant à tester conformément à cette norme JTAG doit notamment posséder un port d'accès (TAP : Test Access Port) composé de cinq signaux spécifiques dont une patte d'entrée (TDI) et une patte de sortie (TDO), ainsi qu'un registre à décalage (Boundary Scan) qui permet de simuler toutes les entrées/sorties du composant en les sérialisant à travers ce registre à décalage.

Le document EP0511752 décrit un circuit intégré JTAG qui possède un registre interface (TDR : Test Data Register) optionnel. Ce circuit intégré JTAG est monté sur une carte électronique comportant une unité de traitement et un bus interne. Le registre interface TDR est un registre à décalage qui peut être lu et écrit en série par un serveur JTAG extérieur au moyen de signaux conformes à la norme JTAG mais le registre interface TDR possède aussi la particularité de pouvoir être chargé ou déchargé en parallèle dans une mémoire double port du circuit intégré. Les informations contenues dans le registre interface TDR sont alors facilement accessibles à l'unité de traitement de la carte électronique dans cette mémoire double port via le bus interne. On peut donc ainsi, à partir d'un serveur JTAG extérieur, solliciter des requêtes qui seront chargées dans une mémoire de la carte électronique et qui seront exécutables par l'unité de traitement (par exemple, des requêtes de lecture READ, d'écriture WRITE, de marche RUN, d'arrêt STOP,...) et donc échanger des informations entre un serveur extérieur et l'unité de traitement.

Cette solution permet notamment de lancer à distance des autotests et de faire du télédiagnostic, à condition cependant que l'unité de traitement de la carte électronique soit opérationnelle et soit capable d'exécuter un programme minimum. Néanmoins, ces fonctionnalités ne permettent pas de télécharger de l'extérieur des logiciels dans une mémoire de la carte électronique tant que l'unité de traitement de la carte électronique n'est pas opérationnelle. De même, toute requête ou instruction venant d'un serveur JTAG extérieur pour faire du télédiagnostic est intrusive vis-à-vis du fonctionnement de l'unité de traitement dans la mesure où cette solution utilise les capacités d'exécution de l'unité de traitement, ce qui peut pénaliser certaines applications, notamment des applications d'automatisme temps réel.

La présente invention a donc pour but de pallier ces inconvénients. Grâce au système décrit dans l'invention, il sera possible, à partir d'un serveur JTAG, de télécharger des informations dans une mémoire d'une carte électronique ou de faire un télédiagnostic d'une carte électronique sans nécessiter que l'unité de traitement de cette carte électronique ne soit opérationnelle. Il sera également possible de faire du diagnostic non intrusif sans incidence sur le déroulement d'un programme exécuté par l'unité de traitement de la carte électronique.

Un autre but de l'invention est de pouvoir accéder à ces fonctions de téléchargement et de télémaintenance à distance à partir d'équipements clients utilisant les technologies de l'Internet.

Pour cela, l'invention décrit un système de téléchargement et de télémaintenance d'une carte électronique appartenant à un équipement d'automatisme et comprenant au moins une unité de traitement, un bus interne et un contrôleur de ressources doté d'un ou plusieurs registres interfaces JTAG accessibles en lecture et en écriture par un serveur JTAG extérieur à l'équipement d'automatisme, au moyen de signaux répondant à la norme JTAG. Selon l'invention, le contrôleur de ressources contient une machine d'état qui est capable d'interpréter et d'exécuter des instructions mémorisées dans le ou les registres interfaces JTAG et qui est susceptible d'accéder aux ressources gérées par le contrôleur de ressources, sans intervention de l'unité de traitement de la carte électronique, dans le but de faire du téléchargement et de la télémaintenance de la carte électronique. La machine d'état communique avec des ressources partagées avec l'unité de traitement de la carte électronique et accessibles via un bus périphérique contrôlé par le contrôleur de ressources. La machine d'état est capable d'écrire dans le ou les registres interfaces JTAG des informations relatives à l'équipement d'automatisme.

Selon une caractéristique, le contrôleur de ressources comporte des moyens de gestion de priorité pour donner en priorité à l'unité de traitement l'accès aux ressources partagées entre l'unité de traitement et la machine d'état.

Selon une autre caractéristique, le serveur JTAG intègre une fonction serveur d'au moins un protocole amont de façon à pouvoir communiquer sur un réseau global TCP/IP avec un équipement client du protocole amont. Le serveur JTAG comporte une unité centrale raccordée à une interface liaison aval gérant un port de communication aval pour communiquer avec la carte électronique selon la norme JTAG et à une interface liaison amont gérant une connexion au réseau global TCP/IP. L'unité centrale du serveur JTAG exécute un programme de conversion capable d'interpréter des messages IP en provenance de l'interface liaison amont pour générer des trames JTAG à émettre par l'interface liaison aval et capable d'interpréter des trames JTAG en provenance de l'interface liaison aval pour générer des messages IP à émettre par l'interface liaison amont.

D'autres caractéristiques et avantages vont apparaître dans la description détaillée qui suit en se référant à un mode de réalisation donné à titre d'exemple et représenté par les dessins annexés sur lesquels :
- la figure 1 représente l'architecture générale d'un système de téléchargement et de télémaintenance d'une carte électronique conforme à l'invention,
- la figure 2 détaille l'architecture d'une carte électronique comportant un système selon la figure 1.

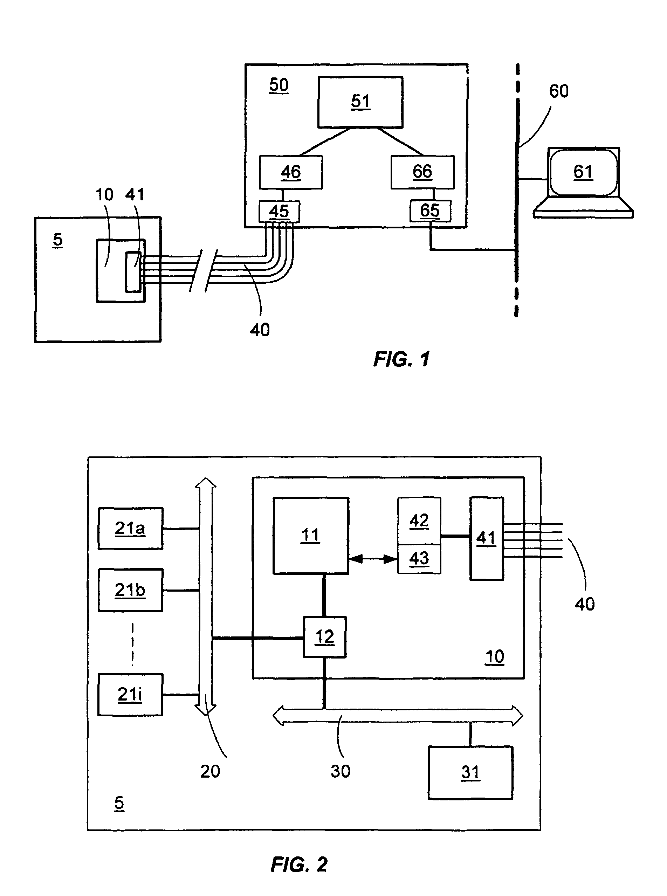

En référence à la figure 2, une carte électronique 5 appartenant à un équipement d'automatisme comporte un contrôleur de ressources (communément appelé CHIPSET) 10 qui communique avec au moins une unité de traitement 31 par un bus 30 interne à la carte électronique 5. L'exemple illustré comporte une unité de traitement 31 distincte du contrôleur de ressources 10. On pourrait aussi prévoir de façon équivalente que le contrôleur de ressources 10 et l'unité de traitement 31 soient intégrées dans un même composant électronique.

De façon classique, le contrôleur de ressources 10 est notamment chargé de gérer l'accès à un ensemble de ressources 21a,21b,21i avec lesquelles il est connecté par un bus périphérique 20, déchargeant ainsi l'unité de traitement 31 de cette tâche. Ces ressources 21a,21b,21i comprennent, par exemple, des moyens de mémorisation tels qu'une mémoire vive RAM, une mémoire morte de type FLASH ou de type EPROM, une carte mémoire PCMCIA, des périphériques tels qu'une interface pour communication extérieure (de type contrôleur USB, UART de liaison série, interfaces réseaux), une interface vers un bus fond de panier de l'équipement d'automatisme, des moyens de dialogue, tels que écran, souris, clavier, LEDs, etc.... L'unité de traitement 31 est susceptible d'accéder à tout moment à une ou plusieurs de ces ressources 21a,21b,21i, en lecture ou en écriture.

De même, le contrôleur de ressource 10 pourrait gérer l'accès à une ressource particulière du type mémoire cache au moyen d'un autre bus spécifique (non représenté sur les figures) pour garantir à l'unité de traitement 31 une rapidité d'accès à cette ressource particulière. Par ailleurs, les ressources 21a,21b,21i peuvent aussi être elles-mêmes des unités de traitement gérées par le contrôleur de ressources 10.

Selon un autre mode de réalisation, on peut envisager de façon équivalente que la carte électronique 5 possède plusieurs unités de traitement 31 connectées sur un ou plusieurs bus internes 30, le contrôleur de ressources 10 étant alors chargé de gérer en parallèle les accès aux différentes ressources 21a,21b,21i pour l'ensemble de ces unités de traitement 31.

L'unité de traitement 31 exécute un programme constructeur de type système d'exploitation mémorisé dans une mémoire FLASH 21a. De même, l'unité de traitement 31 exécute un programme d'application ou une partie d'un programme d'application mémorisé dans une mémoire RAM 21b, dans le but d'effectuer par exemple des fonctions de contrôle/commande dans une application d'automatisme. La mémoire RAM 21b sert aussi à stocker les différentes données relatives à l'équipement d'automatisme (status, états de fonctionnement, etc...) et à l'application d'automatisme (variables, mesures, consignes, états, défauts, etc...).

Le contrôleur de ressource 10 comporte un port d'accès (TAP) 41 lui permettant de communiquer avec l'extérieur de l'équipement d'automatisme, notamment avec un serveur JTAG extérieur 50, à l'aide de cinq signaux 40 conformes à la norme JTAG : TDI (Test Data Input), TDO (Test Data Output), TMS (Test Mode Signal), TCK (Test Clock), TRST (Test Reset). Dans le contrôleur de ressource 10, le port d'accès 41 est connecté avec des registres standards 42 prévus dans la norme JTAG, notamment un registre d'identification, un registre d'instruction et un registre "Boundary Scan" servant à simuler les différentes entrées/sorties d'un composant. Le contrôleur de ressource 10 possède également au moins un registre interface JTAG optionnel, conforme à la norme JTAG, dénommé ci-après registre tampon 43. Ce registre tampon 43, connecté au port d'accès 41, est capable de mémoriser au moins une adresse mémoire et au moins une donnée. Selon un mode de réalisation préféré, le registre tampon 43 est un registre FIFO comprenant n locations de n' bits.

Selon l'invention, le contrôleur de ressource 10 comporte aussi une machine d'état 11 qui est reliée avec le registre tampon 43. La machine d'état 11 est capable d'interpréter et d'exécuter des instructions qui sont lues dans le registre tampon 43 et envoyées par un serveur JTAG 50. Elle est aussi capable d'écrire des informations dans le registre tampon 43, à destination d'un serveur JTAG 50. Par exemple, la machine d'état 11 est capable d'interpréter et d'exécuter des instructions telles que : "Read Byte", "Write Byte" (lecture, écriture d'octet), "Read Word", "Write Word" (lecture, écriture de mot), "Read Status" (lecture d'état), etc.... Durant l'exécution des instructions lues dans le registre tampon 43, la machine d'état 11 peut avoir besoin d'accéder à une ou plusieurs ressources 21a,21b,21i de la carte électronique 5. Ces ressources 21a,21b,21i sont éventuellement partagées avec l'unité de traitement 31. Pour accéder aux ressources 21a,21b,21i, la machine d'état 11 est conçue pour ne pas utiliser l'unité de traitement 31, mais elle utilise un accès direct au bus périphérique 20 du contrôleur de ressource 10, sans intervention de l'unité de traitement 31. Ainsi, la machine d'état 11 n'utilisant pas les capacités de l'unité de traitement 31, elle ne perturbe donc pas le déroulement du programme exécuté dans l'unité de traitement 31.

Néanmoins, il est important de ne pas ralentir non plus l'accès de l'unité de traitement 31 au bus périphérique 20. C'est pourquoi le contrôleur de ressource 10 comporte des moyens de gestion de priorité 12. Ces moyens 12 ont pour tâche de gérer la priorité d'accès au bus périphérique 20 entre l'unité de traitement 31 et la machine d'état 11. Selon une caractéristique de l'invention, en cas de demande d'accès simultanée au bus périphérique 20 par l'unité de traitement 31 et la machine d'état 11, les moyens de gestion de priorité 12 donnent la priorité à l'unité de traitement 31 afin d'éviter de ralentir son accès au bus périphérique 20.

La machine d'état 11 peut alors accéder directement aux ressources de la carte électronique lui permettant par exemple de programmer la mémoire FLASH 21a, ou de lire et écrire des informations relatives à l'équipement d'automatisme dans la mémoire vive 21b, etc... On peut donc ainsi solliciter la machine d'état 11 pour lui demander de lire ou d'écrire directement des informations dans une carte électronique 5 d'un équipement d'automatisme, autorisant ainsi des fonctions de téléchargement et/ou de télédiagnostic, à partir d'un serveur JTAG 50 extérieur. Pour augmenter la vitesse de transfert lors d'un téléchargement, le système implémente avantageusement un mode "Burst", c'est-à-dire un mode d'auto-incrémentation d'adresse : une adresse de départ est transmise au départ puis les données sont transmises à la suite, la machine d'état 11 se chargeant d'écrire aux adresses successives.

Le serveur JTAG 50 est un équipement informatique, par exemple un ordinateur de type PC, doté d'au moins une unité centrale 51. Cette unité centrale 51 peut exécuter un programme qui peut émettre ou recevoir des trames JTAG conformes à la norme JTAG au moyen des signaux 40. Pour communiquer avec la carte électronique 5 selon le protocole JTAG, l'unité centrale 51 utilise une interface liaison aval 46 gérant un port de communication aval 45 capable de gérer les signaux 40. Selon un mode de réalisation économique, le port de communication aval 45 du serveur JTAG 50 est un port d'entrées-sorties capable de transmettre des signaux logiques. Si le serveur JTAG 50 est un ordinateur de type PC, le port de communication aval 45 est par exemple le port parallèle.

Ur, autre but de l'invention est de pouvoir utiliser des protocoles de l'Internet pour mettre en oeuvre le système décrit dans l'invention. TELNET est un protocole permettant de se connecter sur un appareil distant en tant qu'utilisateur de cet appareil distant. Cela donne la possibilité, à partir d'un poste local appelé client TELNET, d'accéder à un appareil distant, appelé serveur TELNET, en utilisant un réseau global de type Internet, Intranet ou Extranet, conforme à la norme TCP/IP (Transport Control Protocol / Internet Protocol) ou à la norme UDP/IP. Un tel réseau sera appelé "réseau TCP/IP" dans la suite de l'exposé. FTP (File Transfer Protocol) est un protocole qui a été mis à la disposition des utilisateurs pour échanger des fichiers sur un réseau TCP/IP. En utilisant le protocole FTP, un client FTP peut s'adresser à un serveur de fichier FTP pour accéder à un fichier distant en lecture ou en écriture.

Le serveur JTAG 50 est raccordé à un réseau TCP/IP 60 au moyen d'un port réseau 65. Pour communiquer sur le réseau TCP/IP, l'unité centrale 51 utilise une interface liaison amont 66 et intègre un programme capable d'effectuer une fonction serveur d'au moins un protocole standard amont, tels que les protocoles TELNET, FTP, GDB (GNU Debugger) ou autres, pour communiquer sur le réseau TCP/IP 60 avec un équipement distant 61 client du protocole amont au moyen de messages conformes au protocole IP. Le fait d'utiliser un tel protocole standard présente l'avantage de ne pas avoir à développer de fonction client spécifique dans l'équipement distant 61.

Il est donc avantageux de bénéficier des possibilités offertes par le réseau TCP/IP pour mettre en oeuvre un système de téléchargement et de télémaintenance conforme à l'invention. Pour cela, le serveur JTAG 50 comporte un programme de conversion exécuté par l'unité centrale 51, capable d'interpréter des messages IP (contenant notamment des commandes standardisées TELNET ou FTP) en provenance de l'interface liaison amont 66 pour générer des trames JTAG à émettre par l'interface liaison aval 46 et capable d'interpréter des trames JTAG en provenance de l'interface liaison aval 46 pour générer des messages IP à émettre par l'interface liaison amont 66 vers le réseau TCP/IP 60. Ainsi, le protocole FTP sera particulièrement adapté pour télécharger des fichiers, tel qu'un système d'exploitation, dans la carte électronique 5 à partir d'un équipement client 61 raccordé au réseau TCP/IP 60, alors que le protocole TELNET sera particulièrement adapté pour faire du télédiagnostic de la carte électronique 5 à partir d'un équipement client 61.

## Revendications

1. Système de téléchargement et de télémaintenance d'une carte électronique (5) appartenant à un équipement d'automatisme et comprenant au moins une unité de traitement (31), un bus interne (30) et un contrôleur de ressources (10) doté d'un ou plusieurs registres interfaces JTAG (42,43) accessibles en lecture et en écriture par un serveur JTAG (50), extérieur à l'équipement d'automatisme, au moyen de signaux (40) répondant à la norme JTAG, **caractérisé par le fait que** le contrôleur de ressources (10) contient une machine d'état (11) qui est capable d'interpréter et d'exécuter des instructions mémorisées dans le ou les registres interfaces JTAG (43) et qui est susceptible d'accéder aux ressources (21a,21b,21i) gérées par le contrôleur de ressources (10) dans le but de faire du téléchargement et de la télémaintenance de la carte électronique (5), sans intervention de l'unité de traitement (31) de la carte électronique.

2. Système de téléchargement et de télémaintenance selon la revendication 1, **caractérisé par le fait que** la machine d'état (11) communique avec des ressources (21a,21b,21i) partagées avec l'unité de traitement (31) de la carte électronique (5) et accessibles via un bus périphérique (20) contrôlé par le contrôleur de ressources (10).

3. Système de téléchargement et de télémaintenance selon la revendication 2, **caractérisé par le fait que** le contrôleur de ressources (10) comporte des moyens de gestion de priorité (12) pour donner en priorité à l'unité de traitement (31) l'accès aux ressources (21a,21b,21i) partagées entre l'unité de traitement (31) et la machine d'état (11).

4. Système de téléchargement et de télémaintenance selon la revendication 3, **caractérisé par le fait que** les ressources partagées comprennent une mémoire vive (21a) de la carte électronique (5).

5. Système de téléchargement et de télémaintenance selon la revendication 3, **caractérisé par le fait que** les ressources partagées comprennent une mémoire FLASH (21b) de la carte électronique (5).

6. Système de téléchargement et de télémaintenance selon la revendication 1, **caractérisé par le fait que** la machine d'état (11) est capable d'écrire dans le ou les registres interfaces JTAG (43) des informations relatives à l'équipement d'automatisme.

7. Système de téléchargement et de télémaintenance selon la revendication 1, **caractérisé par le fait que** le serveur JTAG (50) intègre une fonction serveur d'au moins un protocole amont de façon à pouvoir communiquer sur un réseau global TCP/IP (60) avec un équipement client (61) du protocole amont.

8. Système de téléchargement et de télémaintenance selon la revendication 7, dans lequel le serveur JTAG (50) comporte une unité centrale (51) raccordée à une interface liaison aval (46) gérant un port de communication aval (45) pour communiquer avec la carte électronique (5) selon la norme JTAG et à une interface liaison amont (66) gérant une connexion (65) au réseau global TCP/IP (60), **caractérisé par le fait que** l'unité centrale (51) du serveur JTAG (50) exécute un programme de conversion capable d'interpréter des messages IP en provenance de l'interface liaison amont (66) pour générer des trames JTAG à émettre par l'interface liaison aval (46) et capable d'interpréter des trames JTAG en provenance de l'interface liaison aval (46) pour générer des messages IP à émettre par l'interface liaison amont (66).

9. Système de téléchargement et de télémaintenance selon la revendication 8, **caractérisé par le fait que** le port de communication aval (45) du serveur JTAG (50) est un port parallèle.

10. Système de téléchargement et de télémaintenance selon la revendication 8, **caractérisé par le fait que** le protocole amont est le protocole FTP.

11. Système de téléchargement et de télémaintenance selon la revendication 8, **caractérisé par le fait que** le protocole amont est le protocole TELNET.

12. Equipement d'automatisme comprenant une ou plusieurs cartes électroniques (5) supportant un système de téléchargement et de télémaintenance selon l'une des revendications précédentes.

## Patentansprüche

1. System zum Fernladen und zur Fernwartung einer elektronischen Karte (5), die zu einer Automatikausstattung gehört und zumindest eine Verarbeitungseinheit (31), einen internen Bus (30) und einen Ressourcencontroller (10) umfasst, der mit einem oder mehreren JTAG-Schnittstellenregistern (42, 43) versehen ist, die zum Lesen und Schreiben über einen JTAG-Server (50) außerhalb der Automatikausstattung mittels Signalen (40), die der JTAG-Norm entsprechen, zugänglich sind, **dadurch gekennzeichnet, dass** der Ressourcencontroller (10) eine Zustandsmaschine (11) enthält, die Anweisungen auslegen und ausführen kann, die in dem oder den JTAG-Schnittstellenregistern (43) gespeichert sind, und die auf die Ressourcen (21a, 21b, 21i) zugreifen kann, die von dem Ressourcencontroller (10) verwaltet werden, um ein Fernladen oder Fernwarten der elektronischen Karte (5) ohne Eingreifen der Verarbeitungseinheit (31) der elektronischen Karte durchzuführen.

2. System zum Fernladen und zur Fernwartung nach Anspruch 1, **dadurch gekennzeichnet, dass** die Zustandsmaschine (11) mit Ressourcen (21a, 21b, 21i), die sie mit der Verarbeitungseinheit (31) der elektronischen Karte (5) teilt und die über einen Peripheriebus (20) zugänglich sind, der von dem Ressourcencontroller gesteuert (10) wird, kommuniziert.

3. System zum Fernladen und zur Fernwartung nach Anspruch 2, **dadurch gekennzeichnet, dass** der Ressourcencontroller (10) Mittel zum Verwalten des Vorrangs (12) umfasst, um der Verarbeitungseinheit (31) vorrangig den Zugang zu den Ressourcen (21a, 21b, 21i), die die Verarbeitungseinheit (31) mit der Zustandsmaschine teilt, zuzuweisen.

4. System zum Fernladen und zur Fernwartung nach Anspruch 3, **dadurch gekennzeichnet, dass** die geteilten Ressourcen einen Lebendspeicher (21a) der elektronischen Karte (5) umfassen.

5. System zum Fernladen und zur Fernwartung nach Anspruch 3, **dadurch gekennzeichnet, dass** die geteilten Ressourcen einen FLASH-Speicher (21b) der elektronischen Karte (5) umfassen.

6. System zum Fernladen und zur Fernwartung nach Anspruch 1, **dadurch gekennzeichnet, dass** die Zustandsmaschine (11) in das oder die JTAG-Schnittstellenregister (43) Daten in Zusammenhang mit der Automatikausstattung schreiben kann.

7. System zum Fernladen und zur Fernwartung nach Anspruch 1, **dadurch gekennzeichnet, dass** der JTAG-Server (50) eine Serverfunktion zumindest eines vorgeschalteten Protokolls integriert, so dass er auf einem globalen TCP/IP-Netz (60) mit einer Clientausstattung (61) des vorgeschalteten Protokolls kommunizieren kann.

8. System zum Fernladen und zur Fernwartung nach Anspruch 7, bei dem der JTAG-Server (50) eine Zentraleinheit (51) umfasst, die an eine nachgeschaltete Verbindungsschnittstelle (46) angeschlossen ist, die einen nachgeschalteten Kommunikationsport (45) verwaltet, um mit der elektronischen Karte (5) gemäß der JTAG-Norm zu kommunizieren, und an eine vorgeschaltete Verbindungsschnittstelle (66), die eine Verbindung (65) mit dem globalen TCP/IP-Netz (60) verwaltet, **dadurch gekennzeichnet, dass** die Zentraleinheit (51) des JTAG-Servers (50) ein Umwandlungsprogramm ausführt, das IP-Meldungen von der vorgeschalteten Verbindungsschnittstelle (66) auslegen kann, um JTAG-Rahmen zu erzeugen, die von der nachgeschalteten Verbindungsschnittstelle (46) zu senden sind, und das JTAG-Rahmen auslegen kann, die von der nachgeschalteten Verbindungsschnittstelle (46) kommen, um IP-Meidungen zu erzeugen, die von der vorgeschalteten Verbindungsschnittstelle (66) zu senden sind.

9. System zum Fernladen und zur Fernwartung nach Anspruch 8, **dadurch gekennzeichnet, dass** der nachgeschaltete Kommunikationsport (46) des JTAG-Servers (50) eine parallele Schnittstelle ist.

10. System zum Fernladen und zur Fernwartung nach Anspruch 8, **dadurch gekennzeichnet, dass** das vorgeschaltete Protokoll das FTP-Protokoll ist.

11. System zum Fernladen und zur Fernwartung nach Anspruch 8, **dadurch gekennzeichnet, dass** das vorgeschaltete Protokoll das TELNET-Protokoll ist.

12. Automatikausstattung mit einer oder mehreren elektronischen Karten (5), die ein System zum Fernladen und zur Fernwartung gemäß einem der vorhergehenden Ansprüche unterstützen.

## Claims

1. System for remotely loading and remotely maintaining an electronic card (5) belonging to automation equipment and comprising at least a processing unit (31), an internal bus (30) and a resources controller (10) with one or more JTAG interface registers (42,43) accessible for reading and writing by a JTAG server (50) external to the automation equipment, by means of signals (40) in conformity with the JTAG Standard, **characterised by** the fact that the resources controller (10) contains a status engine (11) which can interpret and run instructions stored in the JTAG interface register(s) (43) and which can access the resources (21a,21b,21i) managed by the resources controller (10) with the aim of carrying out remote loading and remote maintenance of the electronic card (5), without the intervention of the processing unit (31) of the electronic card.

2. System for remote loading and remote maintenance according to claim 1, **characterised by** the fact that the status engine (11) communicates with the resources (21a, 21b, 21i) shared with the processing unit (31) of the electronic card (5) which are accessible via a peripheral bus (20) monitored by the resources controller (10).

3. System for remote loading and remote maintenance according to claim 2, **characterised by** the fact that the resources controller (10) has priority management facilities (12) which give the processing unit (31) priority access to the resources (21a, 21b, 21i) shared between the processing unit (31) and the status engine (11).

4. System for remote loading and remote maintenance according to claim 3, **characterised by** the fact that the shared resources include an random access memory (21a) of the electronic card (5).

5. System for remote loading and remote maintenance according to claim 3, **characterised by** the fact that the shared resources include a FLASH memory of the electronic card (5).

6. System for remote loading and remote maintenance according to claim 1, **characterised by** the fact that the status engine (11) is capable of writing information relating to the automation equipment to one or more of the JTAG interface registers (43)

7. System for remote loading and remote maintenance according to claim 1, **characterised by** the fact that the JTAG server (50) includes a server function comprised of at least one upstream protocol in order to communicate over a TCP/IP Global network or Wide area network (WAN) (60) with a client equipment (61) with the upstream protocol.

8. System for remote loading and remote maintenance according to claim 7, in which the JTAG server (50) has a central processing unit (51) linked to a downstream linked interface (46) managing a downstream communications port (45) so as to communicate with the electronic card (5) in conformity with the JTAG Standard and to an upstream linked interface (66) managing a connection (65) to the TCP/IP Global network or Wide area network (WAN) (60), **characterised by** the fact that the central processing unit (51) of the JTAG server (50) runs a conversion program capable of interpreting IP messages from the upstream linked interface (66) to generate JTAG frames which the downstream linked interface will send (46) and which can interpreting JTAG frames from the downstream linked interface (46) to generate IP messages which the upstream linked interface will send (66).

9. System for remote loading and remote maintenance according to claim 8, **characterised by** the fact that the downstream communications port (45) of the JTAG server (50) is a parallel port.

10. System for remote loading and remote maintenance according to claim 8, **characterised by** the fact that the upstream protocol is the FTP protocol.

11. System for remote loading and remote maintenance according to claim 8, **characterised by** the fact that the upstream protocol is the TELNET protocol.

12. Automation equipment comprising one or more electronic cards (5) supporting a system for remote loading and remote maintenance according to one of the preceding claims.
